# EUROPEAN PATENT APPLICATION

(11) **EP 1 123 883 A1**
(43) Date of publication of application: **16.08.2001**
(21) Application number: 01301112.7
(22) Date of filing: 08.02.2001
(51) Int. Cl.: B65G 47/248, A21C 9/08

(54) **Method and apparatus for turning food products**

(30) Priority: 10.02.2000 GB 0003105
(71) Applicant: UNITED BISCUITS (UK) LIMITED, West Drayton, Middlesex UB7 6PR (GB)
(72) Inventor: Kelly, Barry Peter, Marlow, Buckighamshire SL7 1TX (GB); Barnes, Oliver John, High Wycombe, Buckighamshire HP14 4PR (GB); Baldwin, Richard Thomas, Maidenheaed, Berkshire S16 3PX (GB)
(74) Representative: Humphreys, Ceris Anne

(57) **Abstract**

In a method or apparatus for turning an article or articles of food material, especially sheeted food material, the article or articles is transported between two co-operating web portions (17,18) which each include a twisted portion.

## Description

The invention relates to the processing of food products.

It is frequently necessary for a food product to be turned over during the course of processing. For example, an article of food material may need to be inverted in order that a topping may be applied from above to the surface of the article that had previously been underneath. It is known for individual pieces of a food material to be inverted by delivering the pieces from a first conveyor onto a second conveyor downstream of the first, inversion occurring at the region in which transfer between the conveyors takes place. Such arrangements necessitate the presence of more than one conveyor with control means for synchronising the movement of the conveyors, and can also be relatively inefficient in terms of space occupied. The complexity of structure and space requirements mean that the prior art arrangements are relatively costly.

In a first aspect of the invention there is provided a method of turning an article or articles of food material, the method comprising transporting the article or articles between first and second portions of a moving web, the first and second web portions having, respectively, a first web surface and a second web surface, said first and second web surfaces extending generally in a direction along which the article or articles travel and defining between them a longitudinally extending path comprising:
an upstream path region defined by opposed upstream portions of said first and second web surfaces;
a downstream path region defined by opposed downstream portions of said first and second web surfaces; and
an intervening skewed path region between said upstream and downstream path regions and defined by opposed intervening portions of said first and second web surfaces;
   wherein each part of said first and second web surfaces travelling from the upstream path region to the downstream path region is rotated, during its passage through the intervening path region, about an axis extending parallel to the general direction of travel whereby the article or articles transported between said first and second web portions are rotated about that axis and thereby turned.

The term "turn" is used herein to in relation to an article or articles to mean changing the orientation of the article or articles relative to their surroundings or, more particularly, relative to an apparatus upon which the article or articles are being transported.

The method of the invention can enable an article or articles of food material to be turned, even where the article(s) is/are relatively delicate. The method offers particular advantages where the article to be turned is a travelling sheet of food material, for example, a sheet of biscuit dough, snack dough or cake dough or, preferably, of a cooked food material, especially baked cake. The travelling sheet is turned continuously as it passes through the intervening path region. Individual articles that may be turned using the method of the invention include, for example, pieces of snack dough or biscuit dough, snack pieces and biscuits. It is often desirable to turn baked biscuits where one surface of the biscuit is to be coated with chocolate as, for aesthetic reasons, it is often preferred to coat the surface that has been underneath and in contact with the support surface during baking. It is a particular advantage of the method of the present invention that it allows an article to be manufactured having two opposed layers of a baked food, one of which has been turned over with respect to the other. In that way, two pieces which each have upper and lower surfaces of different appearance are so arranged that the two surfaces that face outward in the combined product are of the same kind. According to the first aspect of the invention, the first and second web portions are portions of the same web. Such arrangements are especially advantageous because of their simplicity. In particular, driving of a single belt can be effected by less complex driving mechanisms than arrangements having more than one belt, and removes the need for control means to match the speeds of different conveyors.

Advantageously, the first and second web surfaces are turned through substantially 180° in the intervening path region, whereby the article or articles is turned through substantially 180°. Preferably, said article or articles extend horizontally in said upstream path region and the article or articles are inverted. Such an arrangement is especially advantageous, for example, to invert a horizontally extending, travelling sheet of material. It may instead be desired for the article(s) to extend vertically in said upstream path region, the article or articles being inverted. In some circumstances, it may be advantageous for said article(s) in said downstream path region to be at an angle of less than 180° relative to the orientation of said article(s), in said upstream path region. That may be desirable, for example, to turn a travelling sheet that is inclined in the lateral direction such that it is horizontal or vice versa.

The continuous belt is advantageously mounted about at least a first pair of mounting rollers having a first upper roller and a first lower roller and a second pair of mounting rollers having a second upper roller and a second lower roller, said first web portion extending from said first upper roller to said second downstream roller, and said second web portion extending from said first lower roller to said second upper roller. Advantageously, there is at least one web support means arranged between said first and second mounting roller pairs. There may be at least three web support means spaced apart from one another. Each web support means may advantageously be a pair of support rollers, which are inclined relative to the terminal rollers and embrace both the web portions in the intervening path region. Preferably, the length of the intervening path region is at least five, for example at least eight or at least nine times the width of the article or articles to be turned. Where the article to be turned is a sheet, the intervening path region is preferably in the range of from five to fifteen times the width of the sheet.

As already mentioned the food material is advantageously in the form of a travelling sheet. Preferably, the sheet of food material is turned about its longitudinal axis by substantially 180°.

According to a second aspect of the present invention there is additionally provided a method of turning a sheet of food material, the method comprising transporting the sheet between a first moving web portion having a first web surface and a second moving web portion having a second web surface, said first and second web surfaces extending generally in a direction along which the sheet travels and defining between them a longitudinally extending path comprising:
an upstream path region defined by opposed upstream portions of said first and second web surfaces;
a downstream path region defined by opposed downstream portions of said first and second web surfaces; and
an intervening skewed path region between said upstream and downstream path regions and defined by opposed intervening portions of said first and second web surfaces;
   wherein each part of said first and second web surfaces travelling from the upstream path region to the downstream path region is rotated, during its passage through the intervening path region, about an axis extending parallel to the general direction of travel whereby the sheet transported between said first and second web portions is rotated about that axis and thereby turned. In practice of the second aspect of the invention it is preferred for the first and second web portions to be portions of the same endless web, such arrangements offering the advantage of simplicity and eliminating the need for synchronisation of two webs. Arrangements in which said first and second web portions are portions of different webs are within the scope of the invention in said second aspect but are less preferred.

Preferably, the food material is a travelling continuous sheet of food material that is turned from a first orientation relative to a second sheet of food material which is travelling in the same general direction, such that it is in a second, different orientation relative to said second sheet of material. In one especially preferred arrangement, said travelling continuous sheet and said second sheet are each continuous sheets that have been obtained by cutting longitudinally along a common precursor sheet, whereby said continuous sheet and second sheet extend without interruption from said common precursor sheet. The article or articles and the web portions preferably are advanced at a speed of from 1 to 10m per minute. Where the article is a travelling sheet of food material, it is preferably advanced at a speed of from 4 to 6m per minute.

The invention also provides an apparatus for turning an article or articles of food material, comprising an endless web having a first web portion having a first web surface and a second web portion having a second web surface, said first and second web surfaces extending generally in a direction along which in use the article or articles travel and said first and second web portions being drivable so as to advance said first and second web surfaces generally along the direction of travel, said first and second web surfaces defining between them a longitudinally extending path comprising:
an upstream path region defined by opposed upstream portions of said first and second web surfaces;
a downstream path region defined by opposed downstream portions of said first and second web surfaces; and
an intervening path region between said upstream and downstream path regions and defined by opposed intervening portions of said first and second web surfaces;
   wherein in the intervening path region said first and second web surfaces are each skewedly arranged about an axis extending parallel to the general direction of travel such that the intervening path region extends longitudinally and has a rotational component, whereby an article or articles travelling along the path in use are turned in the intervening path region, and there is provided in said intervening path region at least one support member for supporting said web portions during turning of the article or articles.

Advantageously, the apparatus comprises as support means at least one pair of rollers, for example at least three pairs of rollers, spaced from one another along the longitudinal path.

The length of the intervening path region is advantageously at least five times the width of the path, for example at least eight times or at least nine times the width of the path. Advantageously, the length of the path is in the range of from five to fifteen times the width of the path. The width of the path may be at least 50mm, and advantageously at least 100mm, for example, at least 300mm. Preferably, the width of the path is not more than 1m. Advantageously, the spacing between said first and second web surfaces is, in use, in the range of from 1 to 20mm. In practice, the preferred spacing between the first and second web surfaces is dependent upon the nature of the food material being turned. For baked cake, that spacing is advantageously from 8 to 15mm. For a dough the spacing will generally be less, for example, from 1 to 7mm. The spacing between the web surfaces may be adjusted by adjusting the support member or members. For example where, as is preferred, a plurality of pairs of rollers is provided as support members, each roller pair embracing the two web portions, the spacing between the web surfaces may be adjusted by adjusting the spacing of each roller pair.

One form of apparatus according to the invention will now be described, by way of illustration, with reference to the accompanying drawings, in which:
- Fig. 1: is a side view of the apparatus;
- Fig. 2: is a schematic representation of the belt of the apparatus of Fig. 1 and its mounting rollers;
- Fig. 3: is a schematic representation of a method in which the apparatus of Fig. 1 may be used;
- Fig. 3a: is an enlarged schematic view of a turning apparatus used in the method of Fig. 3; and
- Fig. 4: is a perspective view of a food product manufactured by a method of the invention.

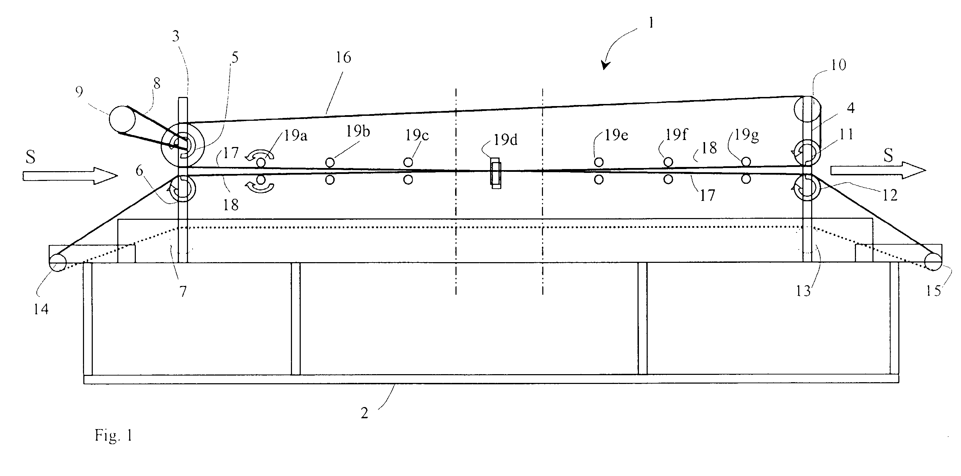

With reference to Fig. 1, a turning apparatus 1 is especially suitable for turning a travelling sheet of cake. The apparatus includes a support frame 2 having an upstream end which is arranged to be in the region of delivery of the travelling sheet of cake from previous processing apparatus, for example, a cutting apparatus, and a downstream end. At each of the upstream and downstream ends is a pair of upwardly extending frame members 3,3' and 4,4' (the opposed member 3',4' of each pair is not visible in Fig. 1). Each frame member is arranged laterally of the frame and is opposed to, and extends parallel to, the other frame member of the pair.

Mounted on and extending between the upstream frame members 3,3' are three rollers 5, 6 and 7. Each roller is supported by bearing means (not shown) provided on the opposed faces of the members 3,3'. Upper roller 5 is connected via drive belt 8 to a drive motor 9, which is arranged to drive roller 5 at a desired rotational speed determined by a control unit (not shown).

Four rollers, 10, 11, 12 and 13 extend horizontally between downstream frame members 4,4'. Two additional rollers 14, 15 are provided, parallel to rollers 5 to 7 and 10 to 13, upstream of the members 3,3' and downstream of members 4,4', respectively. The rollers 5 and 6 co-operate to form an entrant nip at the upstream end of the apparatus, and the rollers 11 and 12 co-operate to form an exit nip at the downstream end of the apparatus.

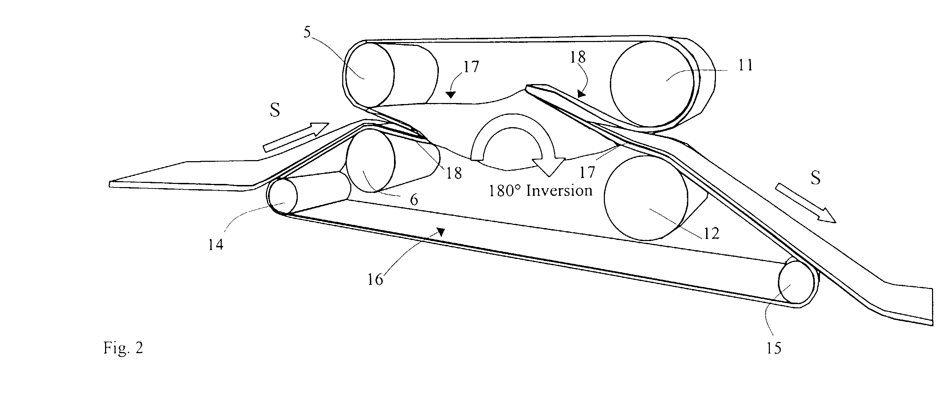

The apparatus further includes a belt 16, which is a Mobius band and extends about the rollers 5 to 7, 10 to 13 and 14 and 15 to provide two twisted web portions as will now be described. Starting at the top of the roller 5, the belt extends about, and fits snugly against, that roller. From the bottom of roller 5, the belt extends towards roller 12 of the exit roller nip, and between the roller 5 and roller 12, the belt is twisted through 180° such that, on reaching roller 12 and turning downwards around its circumference, the surface of the belt that is in contact with roller 12 is the same surface that was in contact with the circumference of roller 5. The portion 17 of belt 16 extending between roller 5 and roller 12 is referred to below as the "first web portion". After passing through the exit nip, the belt passes downwardly to roller 15 where it is turned to pass back over rollers 13 and 7 to upstream turning roller 14, and thence to roller 6 at the entrance nip. During passage from roller 12 to roller 6, the belt remains untwisted. The rollers 13 and 7 serve to maintain the appropriate tension in the belt and to raise the lowest run of the belt so that, if desired, further processing equipment may be positioned underneath without interfering with the belt. After passing over the top of roller 6, the belt extends towards roller 11. The portion 18 of belt 16 extending between roller 6 and roller 11 is referred to below as the "second web portion". The second web portion 18 includes a twist of 180°, in the same rotational direction as the twist of the first web portion 17. Thereafter, the belt turns upwards around rollers 11 and 10 and returns to the starting point at roller 5. If desired, a cleaning device for cleaning the belt may be provided between roller 10 and roller 5, although no cleaning device is shown in the drawings. The belt remains untwisted as it passes from roller 11 to roller 5. As is more easily seen from Fig. 2, the belt is so arranged that the same side always contacts each of the rollers, 5, 6 and 11, 12, and that the other side of the belt (which in use will contact the sheet) does not contact those rollers. The rollers 6, 7, 10, 11, 12, 13, 14 and 15 are each freely rotatable, only roller 5 being driven.

The twists in the respective belt portions 17, 18 extending between entrant nip 5, 6 and exit nip 11, 12, co-operate to form a longitudinal path. At entrant nip 5, 6 the longitudinal path is of elongate rectangular cross-section with its longer dimension extending horizontally in the plane transverse to the direction of the longitudinal path. The longitudinal path then twists through 180° such that, at exit nip 11, 12, the path is again horizontal, having been inverted. Thus, first web portion 17, extending from roller 5 to roller 12, defines the upper boundary of the path at entrance nip 5, 6, but defines the lower boundary of the path at exit nip 11, 12, whilst the second web portion 18 defines the lower boundary of the path at entrance nip 5, 6, but defines the upper boundary of the path at exit nip 11, 12.

The web portions 17, 18 between the entrance nip and the exit nip define the turning path between them. In order to maintain a relatively uniform separation between the web portions 17 and 18, seven pairs of support rollers 19a to 19g are provided at intervals along the path. The support rollers prevent deformation or sagging of the web portions and thus reduce the possibility that portions of the food material will fall out from between the belts. The rollers of each pair are arranged to be parallel to one another and separated by a distance which is of the same order of magnitude as the thickness of the food material to be carried, for example, of the order of 8 to 10mm. In the embodiment shown, the support rollers are freely rotatable and are not driven. The number of support rollers may be chosen according to the length of the two web portions. Where, as in the embodiment described, the sheet of food material is a horizontally extending sheet to be turned through about 180° it will normally be preferable to have at least one pair of rollers 19d extending vertically at a position approximately equidistant from each of the entrant nip and exit nip. A debris-collecting plate (not shown) may be provided underneath the web portions 17 and 18 at least in the vicinity of the central pair of support rollers 19d to collect any small amounts of food debris which fall from between the belts when they are vertical. Such debris may be encountered when the food material is relatively fragile, for example, a dough or baked cake.

The belt 16 may be of any material that is suitable for use in a conveyor. It is preferred for the belt to be of a synthetic polymer material. At least that surface that, in use, contacts the sheet of food material should be of a material that is readily cleanable. Suitable materials for use in at least the food-contacting face of the belt include, for example, polyethylenes, polyesters, polyether ketones and Teflon (trade mark). The belt is preferably of unperforated construction. A perforated belt may be used, but is not preferred.

The belt 16 may be of width of, for example, 400mm to 500mm. The belt width generally equates to the width of the path. The approximate separation between the first web portion 17 and second web portion may be, for example, 10mm, and the distance from the entrant nip 5,6 to the exit nip 11,12 may be, for example, 4m. The drive motor may be arranged to advance the belt 16 at a speed of from 1 to 10m per minute, for example, 4 to 5 metres per minute.

In use, the drive motor is switched on to advance the belt at the desired speed. A sheet S of food material of width approximately 400mm is then advanced by an upstream conveyor (not shown) onto the belt 16 at a point between roller 14 and roller 6. The sheet is then advanced by the belt 16 into the entrant nip 5, 6 and between the web portions 17, 18 to the exit nip 11, 12. In the intervening region between the entrant nip and exit nip, the sheet is turned over by the web portions so that, at the exit nip, the upper surface of the sheet is the surface that, on entry through the entrant nip, was underneath.

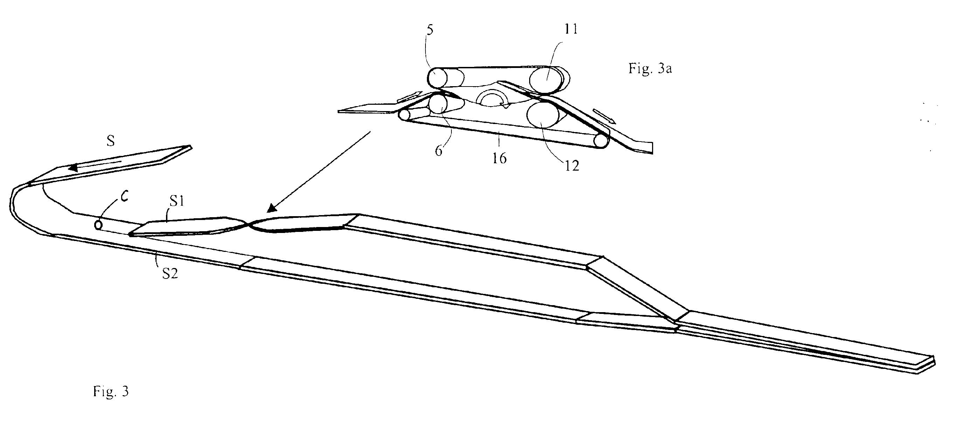

With reference to Fig. 3, in an especially advantageous form of apparatus, there is arranged upstream of apparatus 1 a cutting device C which is arranged to cut an advancing sheet S of food material longitudinally to form two longitudinally advancing sheets S1, S2, each of approximately half the width of the sheet S prior to cutting. One of the two half-width sheets, S1, is inverted with respect to the other, S2, by means of a turning apparatus 1 (shown schematically and in enlargement in Fig. 3a). Such an arrangement is particularly advantageous where the sheet of material is a material in which the upper surface is of different general appearance from the lower surface and a sandwich product containing two superimposed pieces of the material is desired in which both the outer surfaces are required to be of similar general appearance. For example, the sheet may be of a baked sponge cake, in which the upper surface is of a different, "crust" appearance from the lower surface, which is often blemished and of relatively non-uniform appearance as a result of the lower surface having been in contact with a support surface during baking. It may be desired for the outer surfaces of the cake in a sandwich product to be of the crust surface.

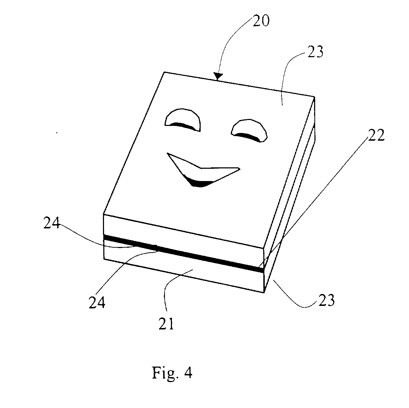

Fig. 4 shows such a composite product. The composite product has a top layer 20 of sponge and a lower layer 21 of sponge separated from one another by a cream filling 22. The top layer 20 and lower layer 21 have each been obtained from a single baked sheet of sponge having an upper, crust surface 23 and a bottom surface 24. The lower layer 21 has been inverted by an apparatus 1 after baking and cutting of a sheet of the baked sponge so that the crust surface 23 is now on the bottom side of layer 21. In the product shown in Fig. 3, after dividing the advancing sheet into two narrower sheets and turning one of those narrower sheets, the individual layers 20 and 21 have each been cut from one of the respective narrower sheets by a patterned cutter, cream filling has been applied to the lower layer 21, and the top layer has been superimposed upon the filling in register with lower layer 21.

## Claims

1. A method of turning an article or articles of food material, the method comprising transporting the article or articles between first and second portions of a moving web, the first and second web portions having, respectively, a first web surface and a second web surface, said first and second web surfaces extending generally in a direction along which the article or articles travel and defining between them a longitudinally extending path comprising:
an upstream path region defined by opposed upstream portions of said first and second web surfaces;
a downstream path region defined by opposed downstream portions of said first and second web surfaces; and
an intervening skewed path region between said upstream and downstream path regions and defined by opposed intervening portions of said first and second web surfaces;
wherein each part of said first and second web surfaces travelling from the upstream path region to the downstream path region is rotated, during its passage through the intervening path region, about an axis extending parallel to the general direction of travel whereby the article or articles transported between said first and second web portions are rotated about that axis and thereby turned.

2. A method as claimed in claim 1, in which the first and second web surfaces are turned through substantially 180° in the intervening path region, whereby the article or articles is/are turned through substantially 180°.

3. A method as claimed in claim 1, in which said article or articles extend horizontally in said upstream path region and the article or articles is inverted.

4. A method as claimed in claim 1, in which said article or articles extend vertically in said upstream path region and the article or articles is inverted.

5. A method as claimed in claim 1, in which the first and second web surfaces are turned through an angle of less than 180°.

6. A method as claimed in any one of claims 1 to 5, in which the belt is supported by at least a first pair of terminal rollers having a first upper roller and a first lower roller and a second pair of terminal rollers having a second upper roller and a second lower roller, said first web portion extending from said first upper roller to said second downstream roller, and said second web portion extending from said first lower roller to said second upper roller.

7. A method as claimed in claim 6, in which there is at least one web support means arranged between said first and second terminal roller pairs.

8. A method as claimed in claim 7, in which there are at least three web support means spaced apart from one another.

9. A method as claimed in any one of claims 1 to 8, in which the length of the intervening path region is at least five times the width of the article or articles to be turned.

10. A method as claimed in any one of claims 1 to 9, in which the food material is in the form of a travelling sheet of the food material.

11. A method as claimed in claim 10, in which the web of food material is turned about its longitudinal axis by substantially 180°.

12. A method of turning a sheet of food material, the method comprising transporting the sheet between a first moving web portion having a first web surface and a second moving web portion having a second web surface, said first and second web surfaces extending generally in a direction along which the sheet travels and defining between them a longitudinally extending path comprising:
an upstream path region defined by opposed upstream portions of said first and second web surfaces;
a downstream path region defined by opposed downstream portions of said first and second web surfaces; and
an intervening skewed path region between said upstream and downstream path regions and defined by opposed intervening portions of said first and second web surfaces;
wherein each part of said first and second web surfaces travelling from the upstream path region to the downstream path region is rotated, during its passage through the intervening path region, about an axis extending parallel to the general direction of travel whereby the sheet transported between said first and second web portions is rotated about that axis and thereby turned.

13. A method as claimed in any one of claims 1 to 12, in which the food material is a travelling continuous sheet of food material that is turned from a first orientation relative to a second sheet of food material which is travelling in the same general direction, such that it is in a second, different orientation relative to said second sheet of material.

14. A method as claimed in claim 13, in which said travelling continuous sheet and said second sheet are each continuous sheets that have been obtained by cutting longitudinally along a common precursor sheet, whereby said continuous sheet and second sheet extend without interruption from said common precursor sheet.

15. An apparatus for turning an article or articles of food material, comprising an endless web having a first web portion having a first web surface and a second web portion having a second web surface, said first and second web surfaces extending generally in a direction along which in use the article or articles travel and said first and second web portions being drivable so as to advance said first and second web surfaces generally along the direction of travel, said first and second web surfaces defining between them a longitudinally extending path comprising:
an upstream path defined by opposed upstream portions of said first and second web surfaces;
a downstream path region defined by opposed downstream portions of said first and second web surfaces; and
an intervening path region between said upstream and downstream path regions and defined by opposed intervening portions of said first and second web surfaces;
wherein in the intervening path region said first and second web surfaces are each skewedly arranged about an axis extending parallel to the general direction of travel such that the intervening path region extends longitudinally and has a rotational component whereby an article or articles travelling along the path in use are turned in the intervening path region, and there is provided in said intervening path region at least one support means for supporting said web portions during turning of the article or articles.

16. An apparatus as claimed in claim 15, which comprises as support means one or more pairs of rollers.

17. An apparatus as claimed in claim 15 or claim 16, in which the length of the intervening path region is at least five times the width of the path.

18. An apparatus as claimed in claim 17, in which the width is at least 50mm.

19. An apparatus as claimed in claim 18, in which the width is at least 100mm.

20. An apparatus as claimed in any one of claims 16 to 19, in which the width is not more than 1m.

21. An apparatus as claimed in any one of claims 16 to 20, in which the arrangement is such that in use the spacing between said first and second web surfaces is in the range of from 5 to 20mm.

22. An apparatus as claimed in claim 21, in which said spacing is in the range of from 8 to 15mm.

23. An apparatus as claimed in claim 21, in which said spacing is in the range of from 1 to 7mm.
